# EUROPEAN PATENT SPECIFICATION

(11) **EP 4 261 065 B1**
(45) Date of publication and mention of the grant of the patent: **04.12.2024**
(21) Application number: 23156888.2
(22) Date of filing: 15.02.2023
(51) Int. Cl.: B60K 6/48, B60K 6/387, B60K 6/383, B60K 6/547, B60W 10/06, B60W 10/08

(54) **HYBRID VEHICLE**
HYBRIDFAHRZEUG
VÉHICULE HYBRIDE

(30) Priority: 14.04.2022 JP 2022067002
(43) Date of publication of application: 18.10.2023
(73) Proprietor: Suzuki Motor Corporation, Hamamatsu-shi, Shizuoka 432-8611 (JP)
(72) Inventor: NAKAGAWA, Masayoshi, Hamamatsu-shi, Shizuoka, 432-8611 (JP); HANADA, Kei, Hamamatsu-shi, Shizuoka, 432-8611 (JP)
(74) Representative: Haseltine Lake Kempner LLP

(56) References cited:
- EP-A1- 2 368 739
- EP-A2- 1 209 015
- DE-A1- 102017 208 249
- GB-A- 2 588 970
- US-A1- 2021 260 985

## Description

### [Technical Field]

This invention relates to a hybrid vehicle.

### [Background of the Invention]

As a conventional hybrid vehicle, one described in JP 2009-292314 A is known. The hybrid vehicle described in JP 2009-292314 A includes a manual transmission which is connected to an engine through a clutch, a motor which is provided in an output shaft of the manual transmission, and a clutch releasing means for automatically obtaining a disengaged state of the clutch even when a clutch pedal is not depressed. This clutch releasing means is configured as a hydraulic device including an oil reservoir, an oil pump, a pressure regulating valve, a linear solenoid valve, and the like and applies a hydraulic pressure to the clutch which is engaged by a clutch spring to disengage the clutch.

According to the hybrid vehicle described in JP 2009-292314 A, since the clutch releasing means disengages the clutch at least when the manual transmission is in a non-neutral state in a motor running state using the motor, it is possible to prevent the engine from dragging in the motor running state and to efficiently operate the motor.

### [Prior Art]

### [Patent Literature]

[Patent Literature 1] JP 2009-292314 A
[Patent Literature 2] A power transmission device for a hybrid vehicle is known from DE 10 2017 208249 A1.

### [Summary of the Invention]

### [Problem to be solved by the Invention]

However, in the hybrid vehicle described in JP 2009-292314 A, since the clutch releasing means configured as the hydraulic device including a plurality of components is provided to prevent the engine from dragging in the EV running state (motor running state), there are problems in which the structure becomes complicated and the manufacturing cost increases.

This invention has been made in view of the above-described circumstances and an object of this invention is to provide a hybrid vehicle capable of preventing an engine from dragging in an EV running state without complicating a structure of a hybrid vehicle in which an engine and a manual transmission are connected through a clutch operated by a driver.

### [Means to solve the problem]

The invention is defined by the appended independent claim.

Some optional features are defined by the dependent claims.

### [Effect of the Invention]

In this way, according to this invention, it is possible to provide a hybrid vehicle capable of preventing an engine drag in an EV running state without complicating a structure of a hybrid vehicle in which an engine and a manual transmission are connected through a clutch operated by a driver and to easily switch a running state using an engine and a running state using a motor.

### [Brief description of figures]

[Fig. 1] Fig. 1 is a configuration diagram of a hybrid vehicle according to an embodiment of this invention.
[Fig. 2] Fig. 2 is a flowchart showing a running mode switching operation of the hybrid vehicle according to an embodiment of this invention.

### [Embodiment(s) of the Invention]

A hybrid vehicle according to embodiments of this invention includes: an engine; a clutch operated by a driver; a manual transmission receiving power transmitted from the engine through the clutch; and a drive wheel receiving power transmitted from the manual transmission, wherein the manual transmission includes an input shaft receiving power input from the engine, a counter shaft disposed in parallel to the input shaft, and a plurality of gear pairs changing a rotation speed of the input shaft and transmitting the rotation speed to the counter shaft, wherein a motor generator is connected to a power transmission path between the counter shaft and the drive wheel so that driving power is able to be transmitted, and wherein a one-way clutch transmitting power in one direction from the input shaft to the counter shaft is provided in one gear of a specific gear pair of the plurality of gear pairs. Accordingly, the hybrid vehicle according to embodiments of this invention can prevent the engine from dragging in an EV running state without complicating the structure of the hybrid vehicle in which the engine and the manual transmission are connected through the clutch operated by the driver and to easily switch the running state using the engine and the running state using the motor.

### [Embodiments]

Hereinafter, a hybrid vehicle according to embodiments of this invention will be described with reference to the drawings.

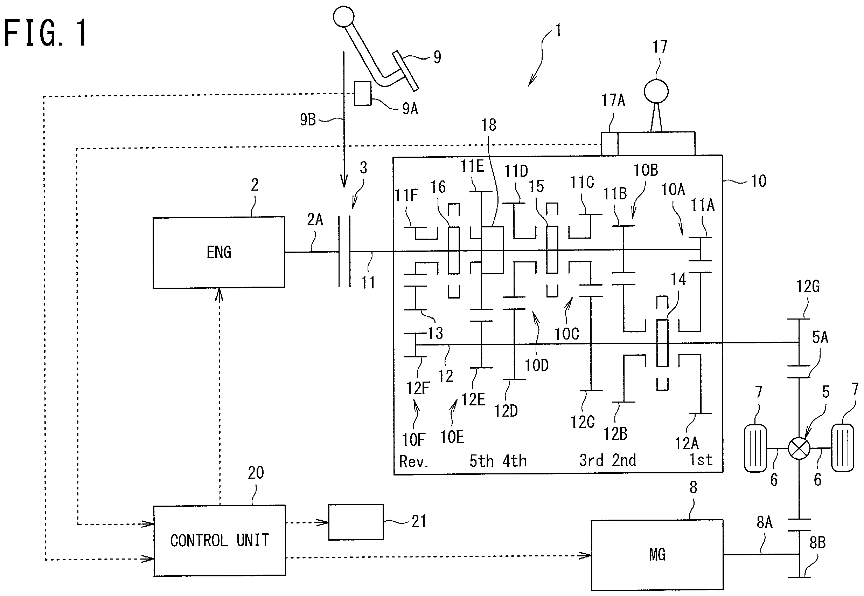

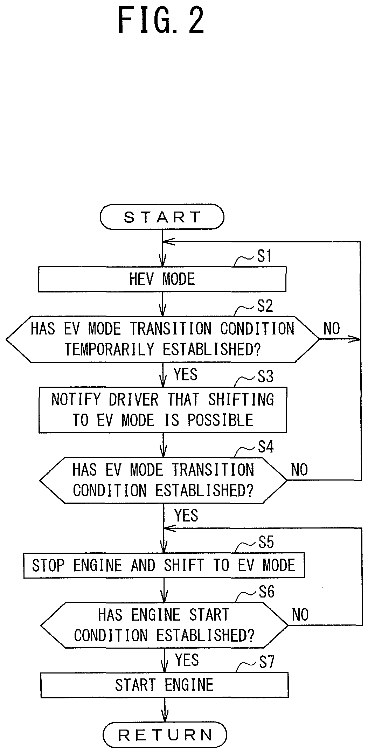

Figs. 1 and 2 are diagrams showing a hybrid vehicle according to embodiments of this invention.

First, a configuration will be described. In Fig. 1, a hybrid vehicle 1 includes an engine 2 (denoted as ENG in the figure), a clutch 3 which is operated by a driver, a manual transmission 10 to which power is transmitted from the engine 2 through the clutch 3, and a drive wheel 7 to which power is transmitted from the manual transmission 10. Further, the hybrid vehicle 1 includes a motor generator 8 (denoted as MG in the figure) which generates running power.

The engine 2 is an internal combustion engine which generates running power (engine torque) by using a gasoline or diesel fuel. The clutch 3 is provided between a crankshaft 2A of the engine 2 and an input shaft 11 of the manual transmission 10 and all the power of the engine 2 transmitted to the manual transmission 10 is transmitted through this clutch 3. The clutch 3 is switched between an engaged state in which power is transmitted between the crankshaft 2A and the input shaft 11 and an open state (disengaged state) in which power is not transmitted. The clutch 3 is mechanically connected to a clutch pedal 9 through a connecting mechanism 9B and the engaged state and the open state are switched in accordance with the movement of the clutch pedal 9. That is, the clutch 3 is opened only when the driver depresses the clutch pedal 9 (clutch operation).

The manual transmission 10 is a parallel shaft gear type transmission that is manually operated to shift to any one of a forward gear stage of a first speed stage to a fifth speed stage and a backward gear stage.

The manual transmission 10 includes the input shaft 11 to which power of the engine 2 is input, a counter shaft 12 which is disposed in parallel to the input shaft 11, and a plurality of gear pairs 10A to 10F which change the rotation speed of the input shaft 11 and transmit the rotation speed to the counter shaft 12. The input shaft 11 is connected to the engine 2 through the clutch 3.

The input shaft 11 is provided with a first-speed stage input gear 11A, a second-speed stage input gear 11B, a third-speed stage input gear 11C, a fourth-speed stage input gear 11D, a fifth-speed stage input gear 11E, and an input gear 11F for a backward gear stage.

The input gears 11A and 11B are fixed to the input shaft 11 and rotate together with the input shaft 11. The input gears 11C, 11D, 11E, and 11F are relatively rotatably supported by the input shaft 11 through a needle bearing (not shown).

The counter shaft 12 is provided with a first-speed stage counter gear 12A, a second-speed stage counter gear 12B, a third-speed stage counter gear 12C, a fourth-speed stage counter gear 12D, a fifth-speed stage counter gear 12E, a counter gear 12F for a backward gear stage, and a final drive gear 12G for a forward gear stage.

The counter gears 12A, 12B, 12C, 12D, and 12E always mesh with the input gears 11A, 11B, 11C, 11D, and 11E constituting the same gear stage. For example, the fourth-speed stage counter gear 12D always meshes with the fourth-speed stage input gear 11D. The counter gear 12F for a backward gear stage always meshes with an idler gear 13 always meshing with the input gear 11F for a backward gear stage.

The input gear 11A and the counter gear 12A constitute the first-speed stage gear pair 10A and the input gear 11B and the counter gear 12B constitute the second-speed stage gear pair 10B. The input gear 11C and the counter gear 12C constitute the third-speed stage gear pair 10C and the input gear 11D and the counter gear 12D constitute the fourth-speed stage gear pair 10D. The input gear 11E and the counter gear 12E constitute the fifth-speed stage gear pair 10E and the input gear 11F and the counter gear 12F constitute the gear pair 10F for a backward gear stage.

The counter gears 12A and 12B are relatively rotatably supported by the counter shaft 12 through a needle bearing (not shown). The counter gears 12C, 12D, 12E, and 12F and the final drive gear 12G are fixed to the counter shaft 12 and rotate together with the counter shaft 12.

In this embodiment, the fifth speed stage is the forward gear stage with the smallest reduction ratio and is the highest speed stage also called as a top gear. The gear pair 10E constituting the fifth speed stage is a specific gear pair in the plurality of gear pairs 10A to 10F. A one-way clutch 18 is provided in the input gear 11E which is one gear of the gear pair 10E constituting the fifth speed stage and is provided in the input shaft 11.

The one-way clutch 18 is provided between the outer peripheral portion (the tooth portion) of the input gear 11E and the inner peripheral portion (the connection portion to the input shaft 11). Specifically, the input gear 11E is divided into the outer peripheral portion side always meshing with the counter gear 12E and the inner peripheral portion side connected to the input shaft 11 at a synchronizer 16 to be described later and the one-way clutch 18 is provided therebetween.

The one-way clutch 18 rotates the outer peripheral portion of the input gear 11E together with the inner peripheral portion of the input gear 11E when the rotation speed of the inner peripheral portion of the input gear 11E is about to be equal to or larger than the rotation speed of the outer peripheral portion of the input gear 11E and conversely allows the rotation speed of the outer peripheral portion of the input gear 11E to be equal to or larger than the rotation speed of the inner peripheral portion of the input gear 11E. That is, when the rotation speed of the input shaft 11 is smaller than the rotation speed of the tooth portion of the input gear 11E, the tooth portion of the input gear 11E is relatively rotated (idly rotated) with respect to the input shaft 11. Thus, the one-way clutch 18 transmits power from the input shaft 11 to the counter shaft 12 in a direction in which the rotation speed of the counter shaft 12 increases and transmits power from the counter shaft 12 to the input shaft 11 in a direction in which the rotation speed of the input shaft 11 decreases. Additionally, the magnitude of the rotation speed mentioned here is the rotation speed in which the direction in which the vehicle rotates when moving forward is positive.

A synchronizer 14 for switching a first speed stage and a second speed stage is provided between the counter gear 12A and the counter gear 12B of the counter shaft 12. A synchronizer 15 for switching a third speed stage and a fourth speed stage is provided between the input gear 11C and the input gear 11D of the input shaft 11. A synchronizer 16 for switching a fifth speed stage and a backward gear stage is provided between the input gear 11E and the input gear 11F of the input shaft 11. A shift lever 17 is mechanically connected to the synchronizers 14, 15, and 16 of the manual transmission 10 through a connecting mechanism (not shown).

When shifting to the first speed stage, the synchronizer 14 connects the first-speed stage counter gear 12A to the counter shaft 12. Accordingly, the counter gear 12A rotates together with the counter shaft 12 and the power of the engine 2 is transmitted from the input shaft 11 to the counter shaft 12 through the input gear 11A and the counter gear 12A.

When shifting to the second speed stage, the synchronizer 14 connects the second-speed stage counter gear 12B to the counter shaft 12. Accordingly, the counter gear 12B rotates together with the counter shaft 12 and the power of the engine 2 is transmitted from the input shaft 11 to the counter shaft 12 through the input gear 11B and the counter gear 12B.

When shifting to the third speed stage, the synchronizer 15 connects the input gear 11C to the input shaft 11. Accordingly, the input gear 11C rotates together with the input shaft 11 and the power of the engine 2 is transmitted from the input shaft 11 to the counter shaft 12 through the input gear 11C and the counter gear 12C.

When shifting to the fourth speed stage, the synchronizer 15 connects the input gear 11D to the input shaft 11. Accordingly, the input gear 11D rotates together with the input shaft 11 and the power of the engine 2 is transmitted from the input shaft 11 to the counter shaft 12 through the input gear 11D and the counter gear 12D.

When shifting to the fifth speed stage, the synchronizer 16 connects the inner peripheral portion of the input gear 11E to the input shaft 11. Accordingly, the inner peripheral portion of the input gear 11E rotates together with the input shaft 11 and the power of the engine 2 is transmitted from the input shaft 11 to the inner peripheral portion of the input gear 11E. Then, the one-way clutch 18 rotates the outer peripheral portion of the input gear 11E together with the inner peripheral portion of the input gear 11E and the one-way clutch 18 transmits the positive driving power of the engine 2 to the counter shaft 12 through the counter gear 12E. Additionally, since the outer peripheral portion of the input gear 11E rotates at a lower speed than the input shaft 11 and the one-way clutch 18 works so that the rotation speed of the inner peripheral portion of the input gear 11E is not equal to or larger than the same rotation speed as the outer peripheral portion of the input gear 11E at a speed other than the fifth speed stage (highest speed stage) during running, the shift operation to the fifth speed stage can synchronize and connect the input shaft 11 and the inner peripheral portion of the input gear 11E without any problem even when the rotation speed of the clutch disc is high.

Further, in the shift operation to the fifth speed stage when the rotation speed of the clutch disc is low, the synchronization can be performed without any problem only by connecting the inner peripheral portion of the input gear 11E, which is separated from the outer peripheral portion of the input gear 11E by the function of the one-way clutch 18, to the input shaft 11.

When shifting to the backward gear stage, the synchronizer 16 connects the input gear 11F to the input shaft 11. Accordingly, the power of the engine 2 is transmitted from the input shaft 11 to the counter shaft 12 through the input gear 11F, the idler gear 13, and the counter gear 12F.

The hybrid vehicle 1 includes a differential device 5 and a ring gear 5A of the differential device 5 meshes with the final drive gear 12G of the manual transmission 10. The differential device 5 transmits the power output from the manual transmission 10 to left and right drive wheels 7 through a drive shaft 6 to be differentially rotatable.

The hybrid vehicle 1 includes a motor generator 8 (denoted as MG in the figure) and this motor generator 8 generates running power (motor torque) by using electric power of a battery (not shown).

An output gear 8B is fixed to an output shaft 8A of the motor generator 8 and the output gear 8B meshes with the ring gear 5A of the differential device 5. Thus, the motor generator 8 is always connected to a power transmission path between the counter shaft 12 and the drive wheel 7 so that power can be input and output. That is, power generated by the motor generator 8 is transmitted to the drive wheel 7 through the differential device 5 and the drive shaft 6 without using the input shaft 11. In contrast, power from the drive wheel 7 is transmitted to the motor generator 8 through the drive shaft 6 and the differential device 5.

The motor generator 8 can also regeneratively generate power using kinetic energy transmitted from the drive wheel 7 when the hybrid vehicle 1 decelerates. Thus, the motor generator 8 is a rotating electrical machine having both functions of a motor and a generator.

In this way, the motor generator 8 is always connected to the power transmission path between the counter shaft 12 and the drive wheel 7 so that power can be input and output. Additionally, the motor generator 8 may be provided in the power transmission path between the counter shaft 12 and the drive wheel 7 and, for example, the counter shaft 12 may be rotated by the motor generator 8 so that the output gear 8B of the motor generator 8 meshes with the final drive gear 12G of the counter shaft 12.

The hybrid vehicle 1 includes a control unit 20. The control unit 20 is configured as a computer unit including a CPU (Central Processing Unit), a RAM (Random Access Memory), a ROM (Read Only Memory), a flash memory storing backup data or the like, an input port, and an output port. The ROM of the computer unit stores a program for allowing the computer unit to function together with various constants or various maps.

A top gear detection sensor 17A is connected to the input port of the control unit 20. The top gear detection sensor 17A is provided in the shift lever 17, detects that the shift lever 17 is in the fifth speed stage as the top gear, and outputs a detection signal to the control unit 20.

A clutch sensor 9A is connected to the input port of the control unit 20. The clutch sensor 9A is provided in the clutch pedal 9, detects a clutch operation (depressing the clutch pedal 9), and outputs a detection signal to the control unit 20. A notification unit 21 configured as a speaker or a display screen (not shown) is connected to the output port of the control unit 20.

The control unit 20 is configured to switch the running mode of the hybrid vehicle 1. The running modes of the hybrid vehicle 1 include an EV mode and an HEV mode.

The EV mode is a running mode that stops the operation of the engine 2 and drives the hybrid vehicle 1 by the power of the motor generator 8. In the EV mode, the control unit 20 controls the motor generator 8 so that a driver request torque is satisfied by the power of the motor generator 8.

The HEV mode is a running mode that operates the engine 2 and drives the hybrid vehicle 1 by the power of the engine 2 and the power of the motor generator 8. In the HEV mode, the control unit 20 controls the engine 2 and the motor generator 8 so that a driver request torque is satisfied by the power of the engine 2 and the power of the motor generator 8.

The control unit 20 switches to the EV mode when a predetermined EV mode transition condition is established in the HEV mode. The EV mode transition condition consists of the following three conditions (1), (2), and (3), and is established when all these three conditions are satisfied.
(1) The state of charge (SOC) of a battery (not shown) that supplies electric power to the motor generator 8 is equal to or larger than a specified value.
(2) The driver request torque based on the depression amount of the accelerator pedal (not shown) can be achieved by the motor torque generated by the motor generator 8.
(3) The gear stage of the manual transmission 10 is operated to the fifth speed stage as the top gear and the clutch pedal 9 is not depressed.

When the EV mode transition condition is not established in the EV mode, that is, at least one of the above three conditions (1), (2), and (3) is not satisfied, the control unit 20 starts the engine 2 and switches to the HEV mode.

When a predetermined EV mode transition condition including a shift operation to the gear pair 10E constituting the fifth speed stage and provided with the one-way clutch 18 is established in the HEV mode, the control unit 20 stops the operation of the engine 2 and switches to the EV mode.

Further, if all the EV mode transition conditions are established when shifting to the gear pair 10E constituting the fifth speed stage and provided with the one-way clutch 18, the control unit 20 notifies the driver by the notification unit 21 that the shifting to the EV mode is possible when shifting to the gear pair 10E constituting the fifth speed stage and provided with the one-way clutch 18. Hereinafter, the state of the vehicle when this notification is made will be described as the "EV mode transition condition is temporarily established."

That is, the control unit 20 determines that the EV mode transition condition is temporarily established when (1) and (2) of the above (1), (2), and (3) included in the EV mode transition condition are satisfied, but (3) is not satisfied (when the state is established if the above (3) is satisfied) and notifies the driver that the shifting to the EV mode is possible when (3) is satisfied.

Further, when the clutch 3 is operated in the EV mode, the control unit 20 starts the engine 2 and switches to the HEV mode. For example, when the driver depresses the clutch 3 to switch from the fifth speed stage to the fourth speed stage in the EV mode, the control unit 20 starts the engine 2 in advance at the timing when the clutch 3 is operated and completes the starting of the engine by the timing when the shifting to the fourth speed stage and the operation of the clutch 3 are finished. Similarly, when the state of charge of the battery becomes smaller than a specified value or when the accelerator pedal is depressed to be a specified value or more, the control unit 20 starts the engine 2 and shifts to the HEV mode.

A running mode switching operation by the control unit 20 will be described with reference to Fig. 2. This running mode switching operation is repeatedly performed at a predetermined interval.

As shown in Fig. 2, the control unit 20 allows the hybrid vehicle 1 to run in the HEV mode (step S1) and then determines whether or not the EV mode transition condition is temporarily established (step S2). The EV mode transition condition is temporarily established when the above (1) and (2) of the above three conditions constituting the EV mode transition condition are satisfied, but (3) is not satisfied.

That is, when the state of charge of the battery is equal to or larger than a specified value and the driver request torque can be satisfied by the motor torque, but the gear stage of the manual transmission 10 is not operated to the fifth speed stage, the EV mode transition condition is temporarily established.

When the EV mode transition condition is not temporarily established in step S2, the control unit 20 returns to step S1.

When it is determined that the EV mode transition condition is temporarily established in step S2, the control unit 20 notifies the driver that the vehicle can shift to the EV mode by the notification unit 21 (step S3).

Next, the control unit 20 determines whether or not the EV mode transition condition is established (step S4).

When the EV mode transition condition is not established in step S4, the control unit 20 returns to step S1.

Here, when the driver operates the gear stage of the manual transmission 10 to the highest speed stage and releases the depression of the clutch pedal 9, the condition (3) is satisfied and the EV mode transition condition is established. When it is determined that the EV mode transition condition is established in step S4, the control unit 20 stops the operation of the engine 2 and switches to the EV mode (step S5). In this way, the control unit 20 automatically switches the running mode to the EV mode when the EV mode transition condition is established. Further, at this time, it is possible to stop the engine 2 without operating the clutch 3 by relatively rotating the inner peripheral portion of the input gear 11E with respect to the outer peripheral portion of the input gear 11E by the action of the one-way clutch 18.

The control unit 20 determines whether or not the engine start condition is established after switching to the EV mode in step S5 (step S6). Here, the control unit 20 determines that the engine start condition is established when the EV mode transition condition is not established. When the engine start condition is not established in step S6, the control unit 20 returns to step S5 and continues the EV mode.

When it is determined that the engine start condition is established in step S6, the control unit 20 starts the engine 2 to switch to the HEV mode (step S7) and ends the current operation.

The starting of the engine 2 in step S7 is performed when a fuel is supplied to the engine 2 and a starter (not shown) provided in the engine 2 is driven to rotate the crankshaft 2A.

In the hybrid vehicle 1 configured as described above, when the gear stage is any of the first speed stage to the fourth speed stage or the backward gear stage, the running mode is set to the HEV mode by the control unit 20 and the vehicle runs by the power of the engine 2 and the power of the motor generator 8. Further, in the hybrid vehicle 1, when the gear stage is the fifth speed stage, the running mode is set to the EV mode by the control unit 20 and the vehicle runs by the power of the motor generator 8.

As the engine brake of the hybrid vehicle 1, at least one of the actual engine brake of the engine 2 and the brake obtained by the regenerative power generation of the motor generator 8 can be used in the HEV mode and the brake obtained by the regenerative power generation of the motor generator 8 can be used in the EV mode.

Additionally, the forward gear stage of the manual transmission 10 is not limited to five speeds of the first speed stage to the fifth speed stage and may be the sixth speed stage or the like. Further, the one-way clutch 18 may be also provided in another gear stage instead of the fifth speed stage as the top gear. For example, the one-way clutch 18 may be provided in one gear of the gear pairs 10A, 10B, and 10C of the first speed stage, the second speed stage, and the third speed stage. In this way, the hybrid vehicle 1 can be started by the power of the motor generator 4.

As described above, according to the hybrid vehicle 1 of this embodiment, the motor generator 8 is connected to the power transmission path between the counter shaft 12 and the drive wheel 7 so that the driving power can be transmitted and the one-way clutch 18 which transmits power in one direction from the input shaft 11 to the counter shaft 12 is provided in the input gear 11E which is one gear of the specific gear pair 10E of the plurality of gear pairs 10A to 10F.

Accordingly, when the vehicle runs in the EV running state by stopping the operation of the engine 2 when the manual transmission 10 is located at the fifth speed stage corresponding to the specific gear pair 10E, it is possible to cut off the transmission of the power from the counter shaft 12 to the input shaft 11 and to prevent the engine 2 from dragging by the idle rotation of the one-way clutch 18. The dragging of the engine 2 means that the crankshaft 2A of the stopped engine 2 is rotated by the rotation of the motor generator or the like through the manual transmission 10 in the EV running state. Here, since it is necessary to add a clutch actuator configured as a hydraulic device or the like, a clutch stroke sensor detecting a depression amount (clutch stroke) of the clutch pedal 9, a shift position sensor detecting a current gear stage, and a clutch pedal load emulator simulating a reaction force when the clutch pedal 9 is depressed to the manual transmission 10 when the clutch 3 is released by a clutch actuator or the like in order to prevent the engine 2 from dragging in the EV running state, the structure becomes complicated. On the other hand, according to this embodiment, it is possible to eliminate the need for a clutch actuator or the like for releasing the clutch 3 and hence to prevent the complication of the structure.

As a result, it is possible to prevent the engine 2 from dragging in the EV running state without complicating the structure in the hybrid vehicle 1 in which the engine 2 and the manual transmission 10 are connected through the manually operated clutch 3.

Further, according to the hybrid vehicle 1 of this embodiment, the one-way clutch 18 is provided in the input gear 11E which is one gear of the gear pair 10E constituting the fifth speed stage which is the forward gear stage with the smallest reduction ratio in the plurality of gear pairs 10A to 10F.

Accordingly, since the top gear detection sensor 17A can be configured as a simple and inexpensive switch or the like capable of detecting that the shift lever 17 is in the fifth speed stage as the top gear, it is possible to reduce the manufacturing cost. Further, since it is possible to suppress the engine 2 from being operated with low efficiency such as when cruising at a constant vehicle speed in a low load state and to allow the vehicle to run by the motor generator 4 which is more efficient than the engine 2 in a low load state, it is possible to improve fuel efficiency. Further, since it is possible to perform the EV running operation in which the engine 2 is stopped at the fifth speed stage which is the top gear used for cruising for a long time, it is possible to perform quiet cruising without engine noise.

Further, according to the hybrid vehicle 1 of this embodiment, the one-way clutch 18 is provided in the input gear 11E which is one gear of the gear pair 10E and provided in the input shaft 11.

Accordingly, since the input gear 11E of the input gear 11E and the counter gear 12E constituting the gear pair 10E has a large diameter, it is easy to ensure a space for adding the one-way clutch 18. Accordingly, it is possible to dispose the one-way clutch 18 with sufficient torque capacity without changing the reduction ratio of the gear pair 10E or the distance between the input shaft 11 and the counter shaft 12 by increasing the size of the input gear 11E. Further, since it is not necessary to rotate the outer peripheral portion of the input gear 11E which has a large diameter and inertial weight together with the input shaft 11 when starting the engine 2 by operating a starter while engaging the clutch 3 in order to switch to the HEV running state, the counter shaft 12 is not rotated anymore and hence the engine 2 can be smoothly started.

Further, according to the hybrid vehicle 1 of this embodiment, the control unit 20 is provided to switch the HEV mode allowing the vehicle to run by the power of the engine 2 and the power of the motor generator 8 and the EV mode allowing the vehicle to run by the power of the motor generator 8 and the control unit 20 switches to the EV mode by stopping the engine 2 when a predetermined EV mode transition condition including a shift operation to the gear pair 10E constituting the fifth speed stage and provided with the one-way clutch 18 is established in the HEV mode.

Accordingly, it is possible to eliminate the need for the driver to switch to the EV mode and to automatically switch to the EV mode when the EV mode transition condition is established.

Further, according to the hybrid vehicle 1 of this embodiment, when the EV mode transition condition is established by the shift operation to the gear pair 10E constituting the fifth speed stage and provided with the one-way clutch 18, the control unit 20 notifies the driver by the notification unit 21 that the shifting to the EV mode is possible when shifting to the gear pair 10E constituting the fifth speed stage and provided with the one-way clutch 18.

Accordingly, for example, when the EV mode transition condition is established by the shift operation to the fifth speed stage, it is possible to prompt the driver to shift to the EV mode by performing the shift operation to the fifth speed stage.

Further, according to the hybrid vehicle 1 of this embodiment, the control unit 20 starts the engine 2 and switches to the HEV mode when the clutch 3 is operated in the EV mode.

Accordingly, since it is possible to start the engine 2 at the timing when the clutch operation associated with the shift operation is performed when the driver shifts the fifth speed stage to another speed stage, it is possible to complete the transition to the HEV mode until the shift operation and the clutch operation end.

### (DESCRIPTION OF REFERENCE NUMERALS)

1 ... Hybrid vehicle, 2 ... Engine, 3 ... Clutch, 7 ... Drive wheel, 8 ... Motor generator, 10 ... Manual transmission, 10A to 10F ... Gear pair, 11 ... Input shaft, 12 ... Counter shaft, 18 ... One-way clutch, 20 ... Control unit

## Claims

1. A hybrid vehicle (1) comprising:
an engine (2);
a motor generator (8);
a clutch (3) operated by a driver;
a manual transmission (10) receiving power transmitted from the engine (2) through the clutch (3); and
a drive wheel (7) receiving power transmitted from the manual transmission (10),
wherein the manual transmission (10) includes an input shaft (11) receiving power input from the engine (2), a counter shaft (12) disposed in parallel to the input shaft (11), a one-way clutch (18), and a plurality of gear pairs (10A-10F) changing a rotation speed of the input shaft (11) and transmitting the rotation speed to the counter shaft (12),
wherein the motor generator (8) is connected to a power transmission path between the counter shaft (12) and the drive wheel (7) so that driving power is able to be transmitted, and
the one-way clutch (18) is provided in one gear of a specific gear pair of the plurality of gear pairs (10A-10F) and configured to prohibit the one gear (11E) from being driven by the counter shaft (12) but to allow the one gear (11E) to drive the counter shaft (12) in one rotational direction,
wherein the specific gear pair constitutes a forward gear stage with the smallest reduction ratio of the plurality of gear pairs (10A-10F),
the hybrid vehicle further comprising:
a control unit (20) switching an HEV mode allowing a running operation by the power of the engine (2) and the power of the motor generator (8) and an EV mode allowing a running operation by the power of the motor generator (8), the hybrid vehicle being **characterized in that**:
when a predetermined EV mode transition condition, including a shift operation for shifting to the forward gear stage with the smallest reduction ratio, is established in the HEV mode, the control unit (20) stops the engine (2) and switches to the EV mode.

2. The hybrid vehicle as claimed in claim 1,
wherein the one gear (11E) in which the one-way clutch (18) is provided is on the input shaft (11).

3. The hybrid vehicle as claimed in claim 1 or 2, further comprising:
a control unit (20) switching an HEV mode allowing a running operation by the power of the engine (2) and the power of the motor generator (8) and an EV mode allowing a running operation by the power of the motor generator (8),
wherein when a predetermined EV mode transition condition including a shift operation to the specific gear pair (11E, 12E) is established when shifting to the specific gear pair (11E, 12E) in the HEV mode, the control unit (20) notifies the driver that the shifting to the EV mode is possible when shifting to the specific gear pair (11E, 12E).

4. The hybrid vehicle as claimed in claim 1 or 2, further comprising:
a control unit (20) switching an HEV mode allowing a running operation by the power of the engine (2) and the power of the motor generator (8) and an EV mode allowing a running operation by the power of the motor generator (8),
wherein when the clutch (3) is operated in the EV mode, the control unit (20) starts the engine (2) and switches to the HEV mode.

## Patentansprüche

1. Hybridfahrzeug (1), umfassend:
einen Motor (2);
einen Elektromotor-Generator (8);
eine Kupplung (3), die von einem Fahrer betrieben wird;
ein Handschaltgetriebe (10), das von dem Motor (2) durch die Kupplung (3) übertragene Leistung empfängt; und
ein Antriebsrad (7), das von dem Handschaltgetriebe (10) übertragene Leistung empfängt,
wobei das Handschaltgetriebe (10) eine Eingangswelle (11), die Leistungseingang von dem Motor (2) empfängt, eine Vorgelegewelle (12), die parallel zu der Eingangswelle (11) angeordnet ist, einen Freilauf (18) und eine Vielzahl von Zahnradpaaren (10A-10F), die eine Drehzahl der Eingangswelle (11) ändert und die Drehzahl auf die Vorgelegewelle (12) überträgt, beinhaltet,
wobei der Elektromotor-Generator (8) mit einem Leistungsübertragungsweg zwischen der Vorgelegewelle (12) und dem Antriebsrad (7) verbunden ist, sodass Antriebsleistung übertragen werden kann, und
der Freilauf (18) in einem Zahnrad eines bestimmten Zahnradpaars der Vielzahl von Zahnradpaaren (10A-10F) bereitgestellt und dazu konfiguriert ist, zu verhindern, dass das eine Zahnrad (11E) von der Vorgelegewelle (12) angetrieben wird, aber zu ermöglichen,
dass das eine Zahnrad (11E) die Vorgelegewelle (12) in einer Drehrichtung antreibt,
wobei das bestimmte Zahnradpaar eine Vorwärtsgangstufe mit dem kleinsten Übersetzungsverhältnis der Vielzahl von Zahnradpaaren (10A-10F) darstellt,
wobei das Hybridfahrzeug ferner Folgendes umfasst:
eine Steuereinheit (20), die einen HEV-Modus, der einen Fahrbetrieb durch die Leistung des Motors (2) und die Leistung des Elektromotor-Generators (8) ermöglicht, und einen EV-Modus, der einen Fahrbetrieb durch die Leistung des Elektromotor-Generators (8) ermöglicht, umschaltet, wobei das Hybridfahrzeug **dadurch gekennzeichnet ist, dass**:
wenn im HEV-Modus ein vorbestimmter EV-Modus-Übertragungszustand, der einen Schaltbetrieb zum Schalten in die Vorwärtsgangstufe mit dem kleinsten Übersetzungsverhältnis beinhaltet, hergestellt wird, die Steuereinheit (20) den Motor (2) stoppt und in den EV-Modus umschaltet.

2. Hybridfahrzeug nach Anspruch 1,
wobei das eine Zahnrad (11E), in dem der Freilauf (18) bereitgestellt ist, sich auf der Eingangswelle (11) befindet.

3. Hybridfahrzeug nach Anspruch 1 oder 2, ferner umfassend:
eine Steuereinheit (20), die einen HEV-Modus, der einen Fahrbetrieb durch die Leistung des Motors (2) und die Leistung des Elektromotor-Generators (8) ermöglicht, und einen EV-Modus, der einen Fahrbetrieb durch die Leistung des Elektromotor-Generators (8) ermöglicht, umschaltet,
wobei, wenn ein vorbestimmter EV-Modus-Übertragungszustand, der einen Schaltbetrieb zu dem bestimmten Zahnradpaar (11E, 12E) beinhaltet, beim Schalten zu dem bestimmten Zahnradpaar (11E, 12E) in dem HEV-Modus hergestellt wird, die Steuereinheit (20) den Fahrer benachrichtigt, dass das Schalten in den EV-Modus beim Schalten zu dem bestimmten Zahnradpaar (11E, 12E) möglich ist.

4. Hybridfahrzeug nach Anspruch 1 oder 2, ferner umfassend:
eine Steuereinheit (20), die einen HEV-Modus, der einen Fahrbetrieb durch die Leistung des Motors (2) und die Leistung des Elektromotor-Generators (8) ermöglicht, und einen EV-Modus, der einen Fahrbetrieb durch die Leistung des Elektromotor-Generators (8) ermöglicht, umschaltet,
wobei, wenn die Kupplung (3) in dem EV-Modus betrieben wird, die Steuereinheit (20) den Motor (2) startet und in den HEV-Modus umschaltet.

## Revendications

1. Véhicule hybride (1) comprenant :
un moteur (2) ;
un moteur-générateur (8) ;
un embrayage (3) actionné par un conducteur ;
une boîte de vitesses manuelle (10) recevant une puissance transmise à partir du moteur (2) à travers l'embrayage (3) ; et
une roue motrice (7) recevant une puissance transmise à partir de la boîte de vitesses manuelle (10),
dans lequel la boîte de vitesses manuelle (10) comporte un arbre primaire (11) recevant une entrée de puissance à partir du moteur (2), un arbre auxiliaire (12) disposé parallèlement à l'arbre primaire (11), un embrayage à roue libre (18), et une pluralité de paires d'engrenages (10A-10F) modifiant une vitesse de rotation de l'arbre primaire (11) et transmettant la vitesse de rotation à l'arbre auxiliaire (12),
dans lequel le moteur-générateur (8) est relié à un trajet de transmission de puissance entre l'arbre auxiliaire (12) et la roue motrice (7) de sorte qu'une puissance motrice puisse être transmise, et
l'embrayage à roue libre (18) est prévu dans un engrenage d'une paire d'engrenages spécifique de la pluralité de paires d'engrenages (10A-10F) et configuré pour empêcher l'engrenage (11E) d'être entraîné par l'arbre auxiliaire (12) mais pour permettre à l'engrenage (11E) d'entraîner l'arbre auxiliaire (12) dans une direction de rotation,
dans lequel la paire d'engrenages spécifique constitue un étage de marche avant avec le plus petit rapport de démultiplication de la pluralité de paires d'engrenages (10A-10F),
le véhicule hybride comprenant également :
une unité de commande (20) commutant un mode HEV permettant un fonctionnement de circulation par la puissance du moteur (2) et la puissance du moteur-générateur (8) et un mode EV permettant un fonctionnement de circulation par la puissance du moteur-générateur (8), le véhicule hybride étant **caractérisé en ce que** :
lorsqu'une condition prédéterminée de transition de mode EV, comportant une opération de changement de vitesse pour passer à l'étage de marche avant avec le plus petit rapport de démultiplication, est établie dans le mode HEV, l'unité de commande (20) arrête le moteur (2) et passe en mode EV.

2. Véhicule hybride selon la revendication 1,
dans lequel l'engrenage (11E) dans lequel l'embrayage à roue libre (18) est fourni se trouve sur l'arbre primaire (11).

3. Véhicule hybride selon la revendication 1 ou 2, comprenant également :
une unité de commande (20) commutant un mode HEV permettant un fonctionnement de circulation par la puissance du moteur (2) et la puissance du moteur-générateur (8) et un mode EV permettant un fonctionnement de circulation par la puissance du moteur-générateur (8),
dans lequel, lorsqu'une condition prédéterminée de transition de mode EV comportant une opération de changement de vitesse à la paire d'engrenages (11E, 12E) spécifique est établie lors du passage à la paire d'engrenages (11E, 12E) spécifique dans le mode HEV, l'unité de commande (20) notifie au conducteur que le passage au mode EV est possible lors du passage à la paire d'engrenages (11E, 12E) spécifique.

4. Véhicule hybride selon la revendication 1 ou 2, comprenant également :
une unité de commande (20) commutant un mode HEV permettant un fonctionnement de circulation par la puissance du moteur (2) et la puissance du moteur-générateur (8) et un mode EV permettant un fonctionnement de circulation par la puissance du moteur-générateur (8),
dans lequel, lorsque l'embrayage (3) est actionné dans le mode EV, l'unité de commande (20) démarre le moteur (2) et passe en mode HEV.
